Europäisches Patentamt

(19) European Patent Office

Office européen des brevets

(11) Publication number: **0 041 378**
**B1**

# (12) EUROPEAN PATENT SPECIFICATION

(45) Date of publication of patent specification: **20.11.86**

(51) Int. Cl.⁴: **G 01 N 35/02**

(21) Application number: **81302382.7**

(22) Date of filing: **29.05.81**

(54) Automatic analytical instrument.

(30) Priority: **30.05.80 JP 73210/80**

(43) Date of publication of application:
**09.12.81 Bulletin 81/49**

(45) Publication of the grant of the patent:
**20.11.86 Bulletin 86/47**

(84) Designated Contracting States:
**DE SE**

(56) References cited:
**DE-A-3 014 250**
**JP-A-54 005 790**
**US-A-3 756 783**
**US-A-3 883 305**
**US-A-3 901 656**
**US-A-4 158 545**
**US-A-4 169 125**
**US-A-4 200 607**

(73) Proprietor: **Hitachi, Ltd.**
**5-1, Marunouchi 1-chome**
**Chiyoda-ku Tokyo 100 (JP)**

(72) Inventor: **Umetsu, Hiroshi**
**2153-27 Tsuda**
**Katsuta-shi (JP)**
Inventor: **Yamashita, Katsuji**
**4977-26 Mutsuno**
**Nakane Katsuta-shi (JP)**
Inventor: **Kondou, Syouji**
**2525-262 Mawatari**
**Katsuta-shi (JP)**

(74) Representative: **Paget, Hugh Charles Edward
et al
MEWBURN ELLIS & CO. 2/3 Cursitor Street
London EC4A 1BQ (GB)**

Courier Press, Leamington Spa. England.

# Description

The present invention relates to an automatic analytical instrument, or more in particular to an instrument in which a reagent is added to a specimen thereby to cause a chemical reaction and the colored condition of the specimen is optically measured thereby to analyze the compositions of the specimen.

In a conventional automatic analytical instrument of discrete type for clinical use, a specimen is sampled by a sampling mechanism in a reaction vessel on a reaction line. According to the analysis item, a reagent is supplied from a reagent distributor to the reaction vessel containing the specimen. When the reagent is supplied to the reaction vessel, the specimen chemically reacts and the colored condition of the specimen is optically measured. As a method of measuring the colored condition of the specimen optically, the reactive solution in the reactive vessel is led to another flow cell where the absorbance is measured by photometer, or the reaction vessel is directly supplied with light thereby to measure the absorbance, thus performing the item of analysis intended.

Generally, in this type of analytical instrument, a multiplicity of analysis items are analyzed on a single specimen. Also, a plurality of reagents may be required for a single analysis item. As a result, this type of analytical instrument requires a multiplicity of reagents for analyzing a specimen. The reagent distributor of the conventional analytical instrument has a syringe mechanism exclusive to each reagent. If 30 different reagents are necessary for measuring 18 items of analysis, for instance, the reagent distributor requires 30 syringe mechanisms.

Further, the conventional analytical instruments are such that in order to prevent contamination by spill-over on the reaction line at the time of replacement of the reagent, the reagent tank for containing the reagents is kept in store at a position separate from the reaction line. In this case, the syringe mechanism of the reagent distributor absorb the reagent from the reagent tank through a tube, and the tube is extended to the reaction line to discharge the reagent into the reaction vessel.

In the conventional analytical instruments, the syringe system becomes bulky with the increase in the analysis items with the result that the reagent distributor is complicated in construction on the one hand and the analytical instrument as a whole unavoidably increases in size on the other hand.

US—A—3756783 describes apparatus in which both reagent and specimen are delivered simultaneously from a probe into the reaction container. It is intended to avoid contamination of the probe by the specimen by taking up the reagent first, so that the reagent is flushed out of the probe after the specimen. However, no steps appear to be taken to avoid contamination between reagents.

JP—A—54-5790 illustrates an analytical instrument in which a plurality of reaction containers are supplied with the appropriate reagents by two reagent pipetting tubes which take up reagent from reagent reservoirs mounted on rotatating tables. The tables are rotated to bring the desired reagent to the pipetting tube. Cleaning means for the pipetting tubes are provided. In such apparatus a syringe mechanism exclusive to each reagent and the tube for leading the reagent from the reagent tank to the reaction vessel is not required, but control mechanisms for the pipetting tubes and for the reagent tables are required.

The object of the present invention is to provide an analytical instrument which may be kept small and simple while nevertheless capable of a large number of analysis items.

According to the present invention, there is provided an automatic analytical instrument as set out in claim 1.

Fig. 1 is a schematic diagram showing a general construction of an embodiment of the present invention.

Fig. 2 is an outside view of the apparatus shown in Fig. 1.

Figs. 3 and 4 are diagrams for explaining in detail the reagent storage section.

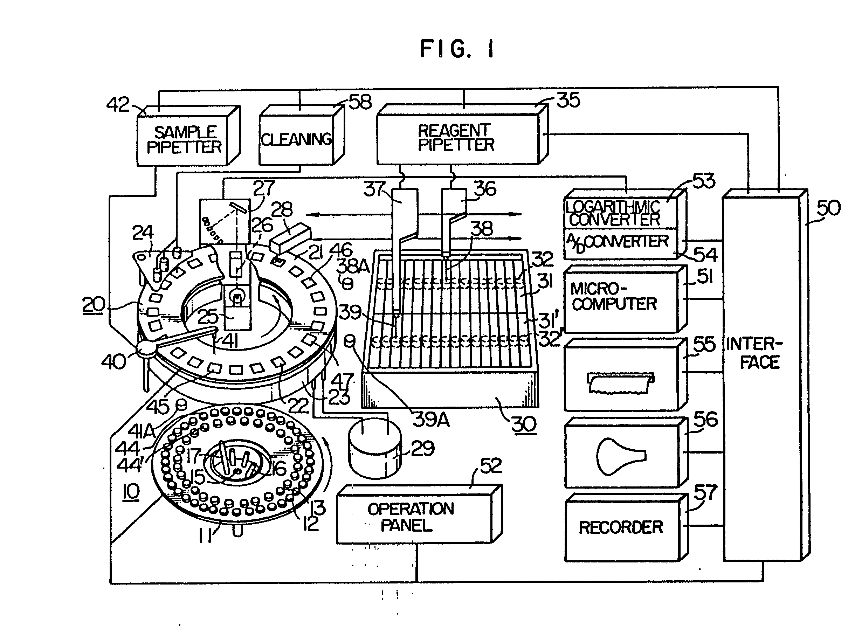

A general construction of the automatic analytical instrument according to an embodiment of the present invention is schematically shown in Fig. 1. In Fig. 1, the analytical instrument may be divided functionally into a sampling system, a reaction system, a reagent storage section, a reagent distributor section and a signal processing/control section.

First, the sampling system will be described. The sampling system includes a sampler section 10 and a sampling mechanism 40. The sampler section 10 has a specimen table 11, an ion analyzing tank 15 and a drive section for rotating the specimen table 11 and the ion analyzing tank 15. The specimen table 11 includes an ordinary specimen case array 12 loaded with the specimens to be analyzed in a plurality of holes on the outer periphery thereof, and a special specimen case array 13 loaded with emergency specimens and reference specimens in a plurality of holes on the inner periphery thereof. These specimen cases are adapted to be transferred to the specimen suction positions 44 and 44' by rotation of the table 11 as required. An ion analyzing tank 15 is arranged rotatably inside of the specimen table 11. A plurality of ion selecting electrodes 16 for sodium, potassium and chlorine ions and a reference electrode 17 are extended within the tank 15. These electrodes are adapted to be immersed in a diluent solution when the specimen sampled from the specimen cases by a sampling mechanism not shown is transferred into the analyzing tank 15 and diluted by the diluent solution.

The sampling mechanism 40 includes a rotary arm holding a specimen processing tube 41, a vertical drive mechanism for the rotary arm, and a sample pipetter 42 for moving the specimen processing tube 41 between the specimen suction positions 44 and 44' and the specimen discharge position 45 at each of which the specimen processing tube 41 is adapted to be driven vertically.

The specimen processing tube 41 of the sampling mechanism 40 is cleaned by the cleaning section 41A before suction of the specimen. The cleaning section 41A is provided midway in the path of movement of the specimen processing tube 41.

Next, the reaction system will be explained. The reaction section 20 includes a temperature-maintained annular path 23 and a reaction table 21 arranged thereon. The reaction table 21 is disposed as high as the specimen table 11. The temperature-maintained path 23 includes a temperature-maintained tank and receives a temperature-maintained liquid from a temperature-maintained water supply section 29. The temperature of the water in the temperature-maintained water supply section 29 is variable over the range between, say, 25°C and 37°C. The reaction table 21 has a multiplicity of holes each loaded with a reaction case 22 of a rectangular transparent cell, thus forming an array of reaction cases. The lower part of the reaction cases is immersed in the temperature-maintained liquid.

A light source 25 is provided inside of the reaction table 21 which is rotated either continuously or intermittently by a drive mechanism not shown. The light fluxes 26 from the light source 25 are led to the photometer 27 through the reaction cases 22 in the temperature-maintained path 23, and dispersed by the diffraction grating in the photometer 27, so that a light ray of specified wavelength is taken out by way of a photosensor. The contents of the reaction cases 22 are agitated by an agitator 28.

A cleaning machine 24 having a plurality of pure water discharge tubes and liquid suction tubes is arranged over the reaction case array. When the reaction table 21 is stationary, these tubes are inserted into the reaction cases thereby to clean the reaction cases. The cleaning machine 24 has a cleaning syringe means 58 for performing a cleaning cycle including the suction of the liquid by the liquid suction tube, the pure water discharge by the pure water discharge tube and the pure water suction by the liquid suction tube. This cleaning cycle is repeated three times for each reaction case.

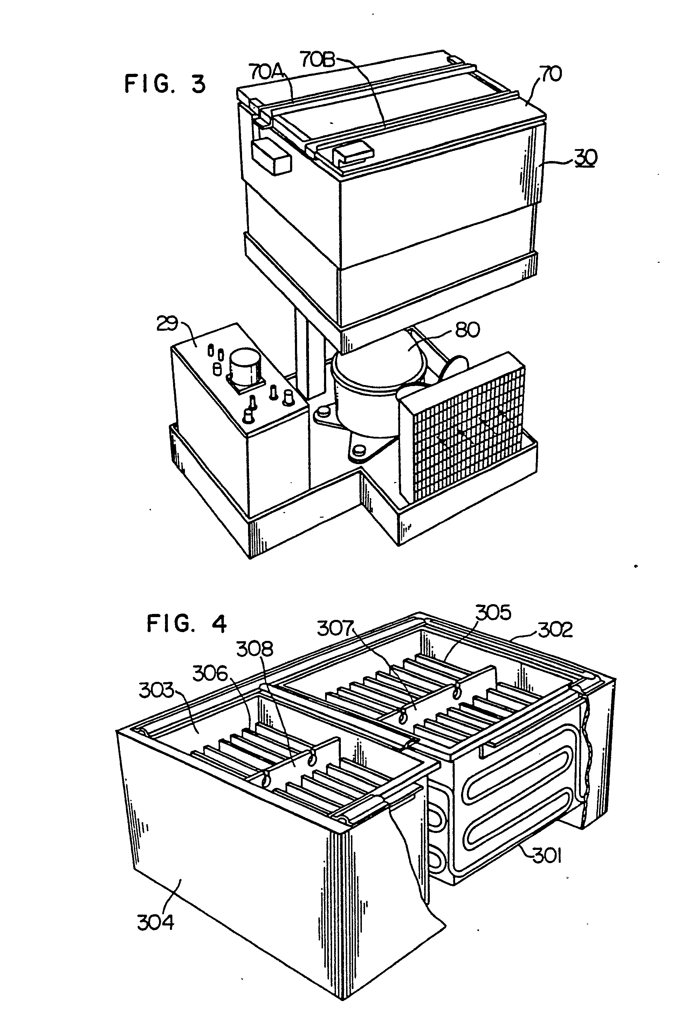

The reagent storage section will be described. The reagent storage section 30 is disposed in proximity to the reaction section 20 in such a manner that the height of the reagent cases 31 and 31' is substantially the same as that of the reaction table 21. The storage section 30 includes a refrigerator which contains two lines of series arranged reagent cases 31 and 31' in the form of rectangular parallelepiped. Each of the cases 31 and 31' is prepared according to the analysis item and has openings 32 and 32'. The relation between the openings 32 and 32' and the lines of the reaction cases 22 and the detail of the storage section 30 will be described later with reference to Figs. 3 and 4.

Now, the reagent distribution system will be described. The reagent pipetter 35 has reagent pipetting sections 36 and 37 transferred along a rail not shown. The reagent absorbing-discharging tubes 38 and 39 are mounted on the pipetting sections 36 and 37. The reagent absorbing-discharging tubes 38 and 39 are adapted to reciprocate independently of each other. The reagent absorbing-discharging tube 38 is moved along the line of the openings 32 up to the reagent discharge position 46. On the other hand, the reagent absorbing-discharging tube 39 is adapted to move along the line of the openings 32' up to the reagent discharge position 47. The line of the reagent cases 31 and that of the cases 31' are arranged in parallel to each other, and so are the lines of the openings 32 and 32'. The reagent storage cases or tanks 31 and 31' are rectangular parallelepiped in form and therefore a multiplicity of them can be arranged in closely adjacent relation to each other. The reagent absorbing-discharging tubes 38 and 39 are stopped over an appropriate opening of the reagent tanks 31 and 31' according to the analysis item involved, and moved down to take in and hold the reagent, followed by upward movement thereby to discharge the reagent held into the reaction case 22. The reagent absorbing-discharging tubes 38 and 39 are cleaned at the cleaning sections 38A and 39A respectively before suction of the reagent. The openings 32 of the reagent case array 31, the cleaning section 38A and the reagent discharge position 46 of the reaction table 21 are aligned in a straight line. The reagent absorbing-discharging tubes 38 and 39 have a reagent surface level sensor not shown, in response to the output of which the surface level of the reagent is detected. The operation of this sensor causes the reagent absorbing-discharging tubes 38 and 39 to constantly take in a predetermined amount of reagent. The reagent pipetting sections 36 and 37 have a preheater not shown for heating the reagent up to a temperature proper for reaction while the reagent absorbing-discharging tubes 38 and 39 move to the reagent discharge positions 46 and 47.

Finally, the signal processing/control system will be explained. A logarithmic converter 53 is for logarithmic conversion of a measurement signal according to the intensity of the transmitted light from the photometer 27. The resulting conversion value is applied to the A/D converter 54 for conversion into a digital signal. A printer 55 is for printing the measurement result by analysis item of the reagent. The cathode ray tube 56 is for displaying the result of measurement and the conditions of analysis. A cassette tape recorder 57 is used for analysis with the cassette tape storing the conditions of analysis. After the cassette tape is read by the cassette tape recorder 57, the reagent tank is replaced, thus automatically enabling the item of analysis to be changed. The operating panel 52 is used for entry of the analysis item and the conditions of analysis by item from outside by way of the item keys, profile keys and ten keys. The microcomputer 51 is in charge of general control of the apparatus. The microcomputer 51 is for controlling the sampling system, the reaction system, the reagent storage section and the reagent distribution system on the one hand, and for exchange of information with the A/D converter 54, the printer 55, the cathode ray tube 56, the cassette tape recorder 57 and the operation panel 52 through the interface circuit 50 on the other hand.

The specimen table 11 carrying the specimen to be analyzed is placed on the sampler 10 and the start button of the operation panel 52 is depressed. Then the operation of the analytical instrument starts. The specimen absorbing-discharging tube 41 of the sampling mechanism 40 absorbs and holds the specimen at the specimen suction position 44 or 44' and discharges the held specimen at the specimen discharge point 45. The array of the reaction cases 22 is transferred to cross the light rays 26 and the reaction table 21 makes one revolution plus one step so that the reaction case next to the one that has received the specimen is positioned at the specimen discharge point 45. This sampling operation is continuously repeated. The specimen table 11, after being sampled a number of times equal to the number of analysis items, makes a rotation by one step in preparation for the next specimen analysis.

In this way, the reaction table 21 makes one rotation and one step for each specimen sampling process, while the reaction case that has accepted the specimen for the first time reaches the reagent discharge position 47. The reagent pipetting section 37 absorbs a reagent corresponding to the analysis item from the reagent tank 31', and while holding the same, moves to the reagent discharge point 47 where the reagent is discharged into the reaction case. The specimen in the reaction case chemically reacts and present a color when the reagent is added thereto.

After discharge of the reagent, the reagent absorbing-discharging tube 39 of the reagent pipetting section 37 is cleaned by the cleaning section 39A in preparation for the next reagent discharge to the reaction case. When the first reaction case reaches the reagent discharge point 46, the reagent pipetting section 36 executes the reagent distribution if required according to the analysis item.

The reagent pipetting sections 36 and 37 are respectively hung from the rails and are capable of moving along the rails. These pipetting sections 36 and 37 are also capable of moving vertically together with the rails. The reagent absorbing-discharging tubes 38 and 39 may be stopped at the openings 32 and 32' of each reagent tank if required. The operation of the drive section of the pipetting sections 36 and 37 is controlled by the microcomputer 51. The reagents corresponding to the analysis item of the respective specimens that have reached the discharge positions 46 and 47 are selected by the reagent pipetting sections 36 and 37 so that the absorbing-discharging tubes 38 and 39 provisionally stop over the corresponding reagent tanks 31 and 31'. This is followed by the downward movement of the pipetting sections 36 and 37 with the result that the operation of the reagent pipetter 35 causes a predetermined amount of reagent to be absorbed and held by the absorbing-discharging tubes 38 and 39. Then the pipetting sections 36 and 37 move upward, so that the absorbing-discharging tubes 38 and 39 are horizontally moved to the reagent discharge positions 46 and 47, and the reagents held in the absorbing-discharging tubes is discharged into the corresponding reaction case.

As the reaction table 21 rotates for each sampling operation, the specimen in the reaction case crosses the light rays 26 by the sampling operation, thus enabling the observation of the colored conditions. In other words, the optical characteristics of the same specimen can be observed a plurality of times before the reaction cases reaches the position of the cleaning machine 24.

The wavelength required for the analysis item involved is selected by the wavelength selector circuit not shown from the light received at the photoelectric detector of the photometer 27, so that the signal of a magnitude associated with the intensity of the transmitted light is introduced to the logarithmic converter 53. Subsequently, the analog signal is converted into a digital signal at the A/D converter 54, and through the interface circuit 50, led to the microcomputer 51, where the required calculations are made and the result thereof is stored in the memory. After completion of all the plurality of light measuring operations on the specified analysis item, the plurality of light measurement data are compared with each other and the required calculations are made thereby to print the concentration value as the analysis item involved on the printer 55.

In this way, the measurement is completed when the reaction case containing the first specimen has passed the position of the photometer. And when the reaction case reaches the cleaning position, it is cleaned by the cleaning machine 24 in preparation for the measurement of the next specimen.

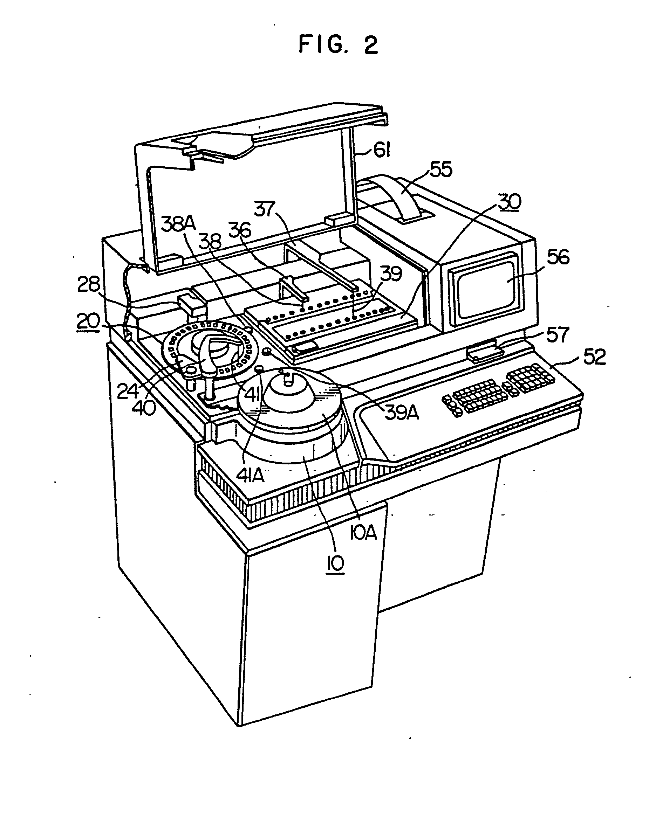

An outside view of the analytical instrument of Fig. 1 is shown in Fig. 2. As shown in Fig. 2, the sampler section 10, the reaction section 20 and the reagent storage section 30 are arranged substantially in the same plane adjacently to each other. The temperature-maintained water supply section 29, the sample pipetter 42, the cleaning syringe 55, the reagent pipetter 35, the microcomputer 51, the interface circuit 50, the logarithmic converter 53, the A/D converter 54, and other circuits such as the power circuit, the distilled cleaning water tank and the waste liquid tank are contained in the instrument body. At the sampler section 10, the specimen table 11 is covered by the table cover 10A formed with two holes. The two holes respectively correspond to the ordinary specimen case 12 and the special specimen case 13. The specimen absorbing-discharging tube 41 of the sampling mechanism 40 absorbs the specimen through the holes of the table cover 10A. The table cover 10A prevents the specimen contained in the specimen cases from being contaminated. Also, the cover 61 is applied during the analyzing work thereby to prevent the external contamination of the reaction section 20 and the reagent storage section 30.

As is obvious from Fig. 2, the apparatus according to the present invention can be simpler and smaller in size than the conventional analytical apparatuses.

The reagent storage section 30 will be described with reference to Figs. 3 and 4. A general construction of the reagent storage section is shown in Fig. 3. The reagent storage section is incorporated in the analytical instrument as a refrigerator unit. In Fig. 3, the reagent storage section 30 is covered with a cover 70 and refrigerated by the freezer section 80. The temperature-maintained water supply section 29 is for supplying temperature-maintained water to the reaction section 20. Guide frames 70A and 70B are mounted on the cover 70. The guide frames 70A and 70B form paths of the reagent absorbing-discharging tubes 38 and 39 of the reagent pipetting sections 36 and 37 respectively.

The internal construction of the reagent storage section 30 is shown in Fig. 4. In Fig. 4, the refrigerator box 302 is mounted by welding or the like means on the entire side walls of the evaporator 301 for passing the refrigerant gas. The container 303 is for maintaining the room temperature. The refrigerator bos 302 and the container 303 are surrounded by the outer box 304. A heat insulating material is filled closely in the space between the entire side walls and the lower side of the refrigerator box 302 and the external box 304. A cold insulating packing is fitted between the refrigerator box 302 and the container 303 thereby to prevent the container 303 from being refrigerated. In order to prevent the external box 304 from being wetted by the cold transmission within the refrigerator box 302 when the atmosphere is high in humidity or temperature, a heater is mounted over the entire inner side of the external box 304. Partition boards 305 and 306 are demountably provided within the refrigerator box 302 and the container 303 in a manner to enable the reagent tanks 31 and 31' to be set in predetermined position. The partition boards 305 and 306 may be taken out of the refrigerator box 302 and the container 303 by hoisting the intermediate plates 307 and 308.

It will be understood from the foregoing description that according to the present invention a reagent pipetting process using a reagent pipetting section common to each reagent is realized, thus providing a compact and simple analytical apparatus in spite of an increased number of analysis items involved.

## Claims

1. An automatic analytical instrument comprising a movable array of reaction containers (22) for, in use, containing specimens being analyzed and reagents, a photometer (27) for optically measuring the color condition of the specimens in the reaction containers, a specimen pipetting means (40) for transferring specimens from specimen containers (12, 13) to said reaction containers (22), reagent storage means (30) having a plurality of reagent reservoirs (31, 31') for containing different reagent solutions and reagent pipetting means (35, 36, 37) for transferring said reagents from said reagent storage means (30) to said reaction containers (22), thereby to select the reagent corresponding to the analysis desired and to supply a reaction container at a predetermined discharge position in said array of reaction containers with the selected reagent, said reagent pipetting means (35, 36, 37) including a plurality of reagent pipetting mechanisms (36, 37) each of which has a movable reagent pipetting tube (38, 39) and driving means for moving said pipetting tube to and from a cleaning position, and to and from said reagent storage means (30), characterized in that the driving means is adapted and arranged for moving the reagent pipetting tube (38, 39) along a path in said reagent storage means (30) to a selected one of said reagent reservoirs in accordance with the analysis desired.

2. An automatic analytical instrument according to claim 1, wherein in said reagent storage means (30) said reagent reservoirs (31, 31') are arranged in at least two rows and said reagent pipetting tubes (38, 39) of said reagent pipetting mechanisms are respectively arranged to move along said rows of reagent reservoirs and to supply the reaction containers at different respective discharge positions in said array of reaction containers.

3. An automatic analytical instrument according to claim 1 or claim 2, wherein each of said reagent pipetting mechanisms (36, 37) has a reagent surface level sensor.

4. An automatic analytical instrument according to any one of claims 1 to 3, wherein said reagent storage means (30) includes a stationary refrigerator chamber containing some of the reagent reservoirs, said reagent pipetting tubes being movable above the refrigerator chamber.

5. An automatic analytical instrument according to claim 4, wherein said reagent pipetting mechanisms (36, 37) include means for heating reagents taken up by said reagent pipetting tubes (38, 39).

## Patentansprüche

1. Automatisches Analyseinstrument mit einer bewegbaren Gruppe von Reaktionsbehältern (22), die beim Betrieb zu analysierende Proben und Reagenzien aufnehmen, einem Photometer (27) zur optischen Messung des Farbzustandes der Proben in den Reaktionsbehältern, einer Proben-Pipettiereinrichtung (40) zum Übertragen von Proben aus Probenhältern (12, 13) in die Reaktionsbehälter (22), einer Reagenzein-Vorratseinrichtung (30) mit mehreren Reagensgefäßen (30, 31') zur Aufnahme unterschiedlicher Reagenslösungen, und einer Reagens-Pipettiereinrichtung (35, 36, 37) zum Übertragen der Reagenzien aus der Reagenzien-Vorratseinrichtung (30) in die Reaktionsbehälter (22), um das der gewünschten Analyse entsprechende Reagens auszuwählen und einen Reaktionsbehälter an einer vorgegebenen Abgabeposition in der Gruppe von Reaktionsbehältern mit dem ausgewählten Reagens zu beschicken, wobei die Reagens-Pipettiereinrichtung (35, 36, 37) mehrere Reagens-Pipettiermechanismen (36, 37) umfaßt, deren jeder ein bewegbares Reagens-Pipettierröhrchen (38, 39) und eine Antriebseinrichtung zum Bewegen des Pipettierröhrchens in eine Reinigungsposition und aus dieser sowie zu der Reagenzien-Vorratseinrichtung (30) und von dieser aufweist, dadurch gekennzeichnet, daß die Antriebseinrichtung so ausgelegt und eingerichtet ist, daß sie das Reagens-Pipettierröhrchen (38, 39) entsprechend der gewünschten Analyse längs einer Bahn in der Reagenzien-Vorratseinrichtung (30) zu einem ausgewählten der Reagensgefäße bewegt.

2. Automatisches Analyseinstrument nach Anspruch 1, wobei in der Reagenzien-Vorratseinrichtung (30) die Reagensgefäße (31, 31') in mindestens zwei Reihen angeordnet und die Reagens-Pipettierröhrchen (38, 39) des Reagens-Pipettiermechanismus jeweils so angeordnet sind, daß sie sich längs der Reihen von Reagensgefäßen bewegen und die Reaktionsbehälter an jeweils verschiedenen Abgabepositionen in der Gruppe von Reaktionsbehältern beaufschlagen.

3. Automatisches Analyseinstrument nach Anspruch 1 oder 2, wobei jeder der Reagens-Pipettiermechanismen (36, 37) einen Reagens-Oberflächenpegelfühler aufweist.

4. Automatisches Analyseinstrument nach einem der Ansprüche 1 bis 3, wobei die Reagenzien-Vorratseinrichtung (30) eine stationäre, Kühlkammer umfaßt, die einige der Reagensgefäße enthält, und die Reagens-Pipettierröhrchen über der Kühlkammer bewegbar sind.

5. Automatisches Analyseinstrument nach Anspruch 4, wobei die Reagens-Pipettiermechanismen (36, 37) Einrichtungen zum Erwärmen der von den Reagens-Pipettierröhrchen (38, 39) aufgenommenen Reagenzien aufweisen.

**Revendications**

1. Instrument d'analyse automatique comprenant une série mobile de conteneurs de réaction (22) pour, en utilisation, contenir des échantillons qui sont analysés et des réactifs, un photomètre (27) pour mesurer optiquement la condition de couleur des échantillons dans les conteneurs de réaction, un moyen formant pipette (40) de l'échantillon pour transférer les échantillons des conteneurs (12, 13) de l'échantillon auxdits conteneurs (22) de réaction, un moyen de stockage du réactif (30) ayant un certain nombre de réservoirs de réactif (31, 31') pour contenir différentes solutions de réactif et un moyen formant pipette du réactif (35, 36, 37) pour transférer lesdits réactifs dudit moyen de stockage de réactif (30) audit conteneur de réaction (22), et ainsi choisir le réactif correspondant à l'analyse souhaitée et pour alimenter un conteneur de réaction en une position prédéterminée d'évacuation dans ladite série de conteneurs de réaction du réactif choisi, ledit moyen formant pipette du réactif (35, 36, 37) comprenant un certain nombre de mécanismes de pipette du réactif (36, 37) dont chacun a un tube mobile de pipette du réactif (38, 39) et un moyen d'entraînement pour déplacer ledit tube formant pipette vers et au loin d'une position de nettoyage et vers et au loin dudit moyen de stockage du réactif (30), caractérisé en ce que le moyen d'entraînement est adapté et agencé à déplacer le tube formant pipette du réactif (38, 39) le long d'un trajet dans ledit moyen de stockage de réactif (30) jusqu'à un réservoir choisi parmi lesdits réservoirs de réactif selon l'analyse souhaitée.

2. Appareil d'analyse automatique selon la revendication 1 où dans ledit moyen de stockage du réactif (30), lesdits réservoirs de réactif (31, 31') sont agencés en au moins deux rangées et lesdits tubes formant pipette de réactif (38, 39) desdits mécanismes de pipette de réactif sont respectivement agencés pour se déplacer le long desdites rangées de réservoirs de réactif et pour alimenter les conteneurs de réaction en différentes positions respectives d'évacuation dans ladite série de conteneurs de réaction.

3. Appareil d'analyse automatique selon la revendication 1 ou la revendication 2 où chacun desdits mécanismes de pipette de réactif (36, 37) a un capteur du niveau de la surface du réactif.

4. Appareil d'analyse automatique selon l'une quelconque des revendications 1 à 3 où ledit moyen de stockage de réactif (30) comprend une chambre stationnaire de réfrigérateur contenant certains des réservoirs de réactif, lesdits tubes de vitesse de réactif étant mobiles au-dessus de la chambre de réfrigérateur.

5. Appareil d'analyse automatique selon la revendication 4 où lesdits mécanisme- formant pipette de réactif (36, 37) comprennent un moyen pour chauffer les réactifs prélevés par lesdits tubes formant pipette de réactif (38, 39).

FIG. 1

REAGENT PIPETTER

CLEANING

SAMPLE PIPETTER

LOGARITHMIC CONVERTER

A/D CONVERTER

MICRO-COMPUTER

INTER-FACE

RECORDER

OPERATION PANEL

1

FIG. 2

0 041 378

FIG. 3

FIG. 4

3